# EUROPEAN PATENT APPLICATION

(11) **EP 4 520 230 A1**
(43) Date of publication of application: **12.03.2025**
(21) Application number: 24157826.9
(22) Date of filing: 15.02.2024
(51) Int. Cl.: A47C 27/08

(54) **INFLATABLE PAD**

(30) Priority: 11.09.2023 CN 202322464349 U
(71) Applicant: Bestway Inflatables & Material Corp., Shanghai 201812 (CN)
(72) Inventor: Zeng, Xianglin, SHANGHAI, 201812 (CN)
(74) Representative: Gulde & Partner

(57) **Abstract**

The present disclosure provides an inflatable pad (100), the inflatable pad (100) comprising: a top sheet (101); a bottom sheet (102) connected to the top sheet (100) to jointly define an inflatable chamber (106); an air valve (109); and at least one thermal insulation layer (103), the thermal insulation layer (103) being an integral-piece batting-type sheet material, the thermal insulation layer (103) being arranged in the inflatable chamber (106) and welded to the top sheet (101) and/or the bottom sheet (102) along a plurality of welding regions. The inflatable pad (100) according to the present disclosure facilitates mass production, has a good thermal insulation performance, and can also reduce noises when a user turns over, thereby improving comfort during use.

## Description

### Technical Field

The present disclosure generally relates to an inflatable pad, and in particular to an inflatable pad for wild camping.

### Background Art

During outdoor camping, campers often require a portable inflatable pad for thermal insulation and cushioning due to the cold and hard ground in the wild and a significant drop in temperature especially at night. The inflatable pad typically includes a top sheet and a bottom sheet connected to each other to form an inflatable chamber. The inflatable pad has an important role in reducing heat transfer between the top sheet and the bottom sheet of the inflatable pad as much as possible. Typically, a human body sleeps on top of the top sheet of the inflatable pad, and the ground is located below the bottom sheet of the inflatable pad. If the inflatable pad can successfully prevent or significantly reduce the heat transfer between the top sheet and the bottom sheet (in other words, the inflatable pad has a good thermal insulation performance), to avoid the impact of low temperature of the ground on the human body, the human body can retain sufficient heat, thereby enjoying comfortable sleep and being adequately prepared for activities the next day. The inflatable pad with an excellent thermal insulation performance is expected by all campers, climbers, explorers, and hikers.

An insulation fiber is a fiber that can provide a thermal insulation function. The insulation fiber may be made into a batting-type sheet material in a fixed shape, and then the insulation fiber in the fixed shape is placed in the inflatable pad, which can improve the thermal insulation performance of the inflatable pad, and can better preserve heat and prevent heat loss when a user sleeps on the inflatable pad at night. The insulation fiber feels soft and may not make a body feel hard or uncomfortable. In addition, the insulation fiber as a filler rarely makes noise, which is very beneficial for the user to fall asleep quickly and have a deep sleep without being disturbed by the noise.

Commercially available existing inflatable pads (called as a first kind of insulation fiber inflatable pads) containing the insulation fibers are usually formed by cutting a large piece of insulation fiber into multiple small pieces of insulation fibers, and then attaching the multiple small pieces of insulation fibers onto the top sheet by glue, or attaching the multiple small pieces of insulation fibers onto the bottom sheet by glue, or attaching the multiple small pieces of insulation fibers onto the top sheet and the bottom sheet by glue at the same time, so as to fix the insulation fibers in predetermined positions and prevent the insulation fibers from sliding around in the finished inflatable pads later. For ease of the subsequent welding operation, there may be gaps between two adjacent small pieces of insulation fibers. Then, the top sheet and the bottom sheet are welded together through the gaps between two adjacent small pieces of insulation fibers.

There is another kind of commercially available inflatable pads (called as a second kind of insulation fiber inflatable pads) containing the insulation fibers, which are improved on the basis of the first kind of insulation fiber inflatable pads described above, and differ from the first kind of insulation fiber inflatable pads in that at the gaps between the multiple small pieces of insulation fibers, instead of welding the top sheet and the bottom sheet directly, the top sheet and the bottom sheet are welded together by means of tensioning members. The presence of the tensioning members makes the thickness of the inflatable pad larger, which in turn causes an R-value to rise (the exact principle will be further described below). Therefore, the R-values of the second kind of insulation fiber inflatable pads are higher than those of the first kind of insulation fiber inflatable pads. However, the second kind of insulation fiber inflatable pads still use multiple small pieces of insulation fibers.

ASTM F3340-22 "Standard Test Method for Thermal Resistance of Camping Mattresses Using a Guarded Hot Plate Apparatus" is most widely used globally in the standardized test of thermal insulation performance of inflatable pads. Under the test method of ASTM F3340-22, a sample of an inflatable pad is inflated to a rated internal pressure and then placed between a guarded hot plate and a cold plate to be subjected to a constant compressive force. The hot plate is kept at 35°C, the cold plate is kept at 5°C, and the ambient temperature is controlled to be equal to the average temperature of the hot plate and the cold plate. The main heat transfer path of the test method is one-dimensional, and heat transfer is carried out through the vertical thickness of the inflatable pad. Under steady-state conditions, heat flux passing through the sample is measured, and the thermal resistance is calculated by dividing the temperature difference between the hot plate and the cold plate by the heat flux. After a series of conversions, the final thermal resistance is acquired, which is called as an R-value in ASTM F3340-22. The larger the R-value is, the better the thermal insulation performance of the inflatable pad is. The smaller the R-value is, the weaker the thermal insulation performance of the inflatable pad is. In the case where other conditions are the same, users usually prefer inflatable pads with large R-values and good thermal insulation performance.

An inflatable pad that does not include any filler inside and consists of only a top sheet and a bottom sheet typically has an R-value of 1.0 ft²·°F·h/Btu (0.18 K·m²/W) to 1.5 ft²·°F·h/Btu (0.26 K·m²/W) under the ASTM F3340-22 standard, e.g., 1.3 ft²·°F·h/Btu (0.23 K·m²/W). The R-value under the ASTM F3340-22 standard of the inflatable pad (the first kind of insulation fiber inflatable pad) described above that comprises multiple small pieces of insulation fibers between the top sheet and the bottom sheet may be larger than the R-value of the inflatable pad consisting of only the top sheet and the bottom sheet, e.g., within the range of 1.5 ft²·°F·h/Btu (0.26 K·m²/W) to 2.0 ft²·°F·h/Btu (0.35 K·m²/W). The inflatable pad (the second kind of insulation fiber inflatable pad) which comprises multiple small pieces of insulation fibers between the top sheet and the bottom sheet and in which the top sheet and the bottom sheet are connected by means of a tensioning member may be slightly higher than the first kind of insulation fiber inflatable pad.

The first kind of insulation fiber inflatable pads and the second kind of insulation fiber inflatable pads requires to cut a large piece of insulation fiber into multiple small pieces of insulation fibers, and attach the multiple small pieces of insulation fibers onto at least one of the top sheet and the bottom sheet by glue, which saves on some insulation fibers, but leads to a low manufacturing efficiency, a high labor cost and long production time due to the existence of the cutting procedure and the gluing procedure.

The insulation fibers and a metal-plated film may be placed inside an inflatable pad together to improve the thermal insulation performance, but the metal-plated film may make a loud noise when a user turns over, moves and rubs the top sheet, which makes it difficult for a sound-sensitive user to fall asleep at night. Further, foam may be used instead of insulation fibers, but often large chunks of foam are placed inside the inflatable pad when a foam-containing inflatable pad is made, resulting in a significant increase in the weight of a mattress. Users who enjoy hiking and are sensitive to lightweight features are often reluctant to buy heavier foam-containing inflatable pads. Therefore, how to increase the R-value of the inflatable pad with only quiet and lightweight insulation fibers but no other thermal insulation materials has been a technical challenge in the industry.

### Summary of the Disclosure

The objective of the present disclosure is to provide an improved inflatable pad.

For this purpose, the present disclosure provides an inflatable pad, the inflatable pad comprising: a top sheet; a bottom sheet connected to the top sheet to jointly define an inflatable chamber; an air valve; and at least one thermal insulation layer, the thermal insulation layer being an integral-piece batting-type sheet material, the thermal insulation layer being arranged in the inflatable chamber and welded to the top sheet and/or the bottom sheet along a plurality of welding regions.

Compared with an inflatable pad using a disconnected thermal insulation layer in the prior art, the inflatable pad according to the present disclosure comprises a batting-type integral-piece thermal insulation layer being arranged in the inflatable chamber formed by the top sheet and the bottom sheet. In an embodiment the integral-piece thermal insulation layer material may be connected to the top sheet or the bottom sheet. In another embodiment, two integral-piece thermal insulation layer materials may be connected to the top sheet and the bottom sheet, respectively. In embodiments, the thermal insulation pad extends parallel to the top and/or bottom sheet. The thermal insulation pad may extend over more than 90% of the surface area of the at least one of the top sheet or the bottom sheet, respectively. In embodiments, the thermal insulation pad may extend over more than 95% of the surface area of the at least one of the top sheet or the bottom sheet, respectively. In embodiments, the thermal insulation pad may extend over more than 98% of the surface area of the at least one of the top sheet or the bottom sheet, respectively. In the inflatable pad according to the present disclosure, the thermal insulation performance of the inflatable pad is enhanced, heat convection between the top and the bottom of the inflatable pad is reduced, and the R-value is improved.

Furthermore, compared with the inflatable pad using a disconnected thermal insulation layer in the prior art, according to the present disclosure the thermal layer may be fixed more firmly and thus is less likely to fall off. Due to the thermal layers being connected to the top sheet and the bottom sheet of the product for example by means of high-frequency welding, hot-press welding, etc. without cutting the insulation fibers or making holes in the insulation fibers and without attaching the insulation fibers onto the top sheet or the bottom sheet by glue, the inflatable pad according to the present disclosure has fewer manufacturing processes, and is high in manufacturing efficiency, low in labor cost and short in production time.

According to the above technical concept, the present disclosure may further comprise one or more of the following embodiments.

In some embodiments, at least one of the top sheet and the bottom sheet comprises an outer layer facing away from the inflatable chamber and an inner layer facing towards the inflatable chamber, the outer layer being a fabric layer, and the inner layer being made of a polymer material.

In some embodiments, the fabric layer comprises cotton fiber, wool fiber, silk fiber, hemp fiber, regenerated fiber, polyester fiber, polyamide fiber, polyacrylonitrile fiber, polyvinyl alcohol fiber, polypropylene fiber, polyurethane fiber, or inorganic fiber.

In some embodiments, the polymer material comprises polyvinyl chloride, thermoplastic polyurethane elastomer, polyurethane, polypropylene, polyethylene, polyethylene terephthalate or nylon.

In some embodiments, the thermal insulation layer is made of fiber.

In some embodiments, the thermal insulation layer is made of cotton fiber, wool fiber, viscose fiber, acetate fiber, polyester fiber, polyamide fiber, polyacrylonitrile fiber, polyvinyl alcohol fiber, polypropylene fiber, or polyurethane fiber.

In some embodiments, the inflatable pad further comprises at least one connecting sheet, the connecting sheet being arranged in the inflatable chamber and welded between the top sheet and the thermal insulation layer or between the bottom sheet and the thermal insulation layer along the plurality of welding regions.

In some embodiments, the connecting sheet is made of polyvinyl chloride, thermoplastic polyurethane elastomer, polyurethane, polypropylene, polyethylene, polyethylene terephthalate or nylon.

In some embodiments, the connecting sheet is made of a fabric bonding material or a laminated mesh material.

In some embodiments, the connecting sheet has a thickness of 0.04 mm to 0.10 mm, and the top sheet and/or the bottom sheet comprise(s) a polymer material layer welded to the connecting sheet, the polymer material layer having a thickness of 0.04 mm to 0.18 mm.

In some embodiments, the inflatable pad further comprises a plurality of tensioning members connecting the top sheet to the bottom sheet, each of the plurality of tensioning members being simultaneously welded to the thermal insulation layer and the top sheet and/or the bottom sheet along at least one of the welding regions.

In some embodiments, the tensioning member is made of polyvinyl chloride, thermoplastic polyurethane elastomer, polyurethane, polypropylene, polyethylene, polyethylene terephthalate or nylon.

In some embodiments, the tensioning member is made of a fabric bonding material or a laminated mesh material.

In some embodiments, the tensioning member is a C-shaped tensioning member, a Z-shaped tensioning member, or a square tensioning member.

In some embodiments, the inflatable pad further comprises a connecting sheet, the connecting sheet being arranged between the top sheet and the thermal insulation layer and/or between the bottom sheet and the thermal insulation layer so that the thermal insulation layer is welded between the connecting sheet and the plurality of tensioning members.

In some embodiments, the inflatable pad further comprises a lateral confining sheet, the periphery of the top sheet is connected to a top edge of the lateral confining sheet, and the periphery of the bottom sheet is connected to a bottom edge of the lateral confining sheet, such that the top sheet, the bottom sheet and the lateral confining sheet jointly define the inflatable chamber.

In some embodiments, the plurality of welding regions comprises a plurality of welding points and/or a plurality of welding lines distributed uniformly.

In some embodiments, the inflatable pad comprises a single thermal insulation layer, the thermal insulation layer being directly welded to the top sheet and the bottom sheet.

In some embodiments, each of the top sheet and the bottom sheet comprises a polymer material layer welded to the thermal insulation layer, the polymer material layer having a thickness of 0.08 mm to 0.28 mm.

In some embodiments, the inflatable pad comprises a first thermal insulation layer welded to the top sheet and a second thermal insulation layer welded to the bottom sheet.

In some embodiments, the inflatable pad in an inflated state has a height of 2 cm to 62 cm.

In some embodiments, the inflatable pad in an inflated state has a height of 5 cm to 18 cm.

In some embodiments, the thermal insulation layer has a weight of 20 g/m² to 400 g/m².

In some embodiments, the thermal insulation layer has a weight of 80 g/m² to 160 g/m².

In some embodiments, the thermal insulation layer has a thickness of 0.5 cm to 3 cm in a natural fluffy state.

In some embodiments, the thermal insulation layer has a thickness of 0.8 cm to 2 cm in a natural fluffy state.

The inflatable pad according to the present disclosure facilitates mass production, has a good thermal insulation performance, and can also reduce noises when a user turns over, thereby improving comfort during use.

### Brief Description of the Drawings

Other features and advantages of the present disclosure will be better understood from the following optional embodiments described in detail with reference to the accompanying drawings, in which like reference numerals represent the same or similar components.
FIG. 1 is a schematic perspective diagram of an inflatable pad according to a first embodiment of the present disclosure;
FIG. 2A is a schematic partially-exploded diagram of the inflatable pad according to the first embodiment of the present disclosure;
FIG. 2B is a schematic enlarged diagram of a partially-exploded position in FIG. 2A;
FIG. 3 is a partial schematic sectional diagram of the inflatable pad according to the first embodiment of the present disclosure;
FIG. 4 is a partial schematic sectional diagram of an inflatable pad according to a second embodiment of the present disclosure;
FIG. 5 is a schematic exploded diagram of the inflatable pad according to the second embodiment of the present disclosure;
FIG. 6 is a schematic exploded diagram of an inflatable pad according to a third embodiment of the present disclosure;
FIG. 7 is a schematic exploded diagram of an inflatable pad according to a fourth embodiment of the present disclosure;
FIG. 8 is a schematic exploded diagram of an inflatable pad according to a fifth embodiment of the present disclosure;
FIG. 9 is a schematic perspective diagram of an inflatable pad according to a sixth embodiment of the present disclosure;
FIG. 10 is a schematic exploded diagram of the inflatable pad according to the sixth embodiment of the present disclosure; and
FIG. 11 is a schematic exploded diagram of an inflatable pad according to a seventh embodiment of the present disclosure.

It can be understood that the accompanying drawings are not only intended to explain and illustrate the present disclosure, but also contribute to the definition of the present disclosure if necessary.

### Detailed Description of Embodiments

The implementation and application of the embodiments will be discussed in detail below. However, it can be understood that the specific embodiments discussed herein only illustratively describe the specific implementation and application of the present disclosure, but are not intended to limit the scope of the present disclosure.

In the description, the expressions indicating orientations such as upper, lower, top, bottom, etc., which are used for describing the structural positions of various components, are not absolute but relative. The expressions indicating orientations are appropriate when the various components are arranged as shown in the figures, but should change accordingly when the positions of the components in the figures change.

In the description, unless expressly stated or limited otherwise, the terms such as "fixing", "connection", "connected", etc. should be interpreted broadly, for example, either fixed or detachable connection, or integration; or may be a direct connection or an indirect connection by means of an intermediate medium, or may be communication between interiors of two elements or interaction between the two elements. For those skilled in the art, the specific meaning of the above terms in the description would have been understood according to specific circumstances.

### First Embodiment

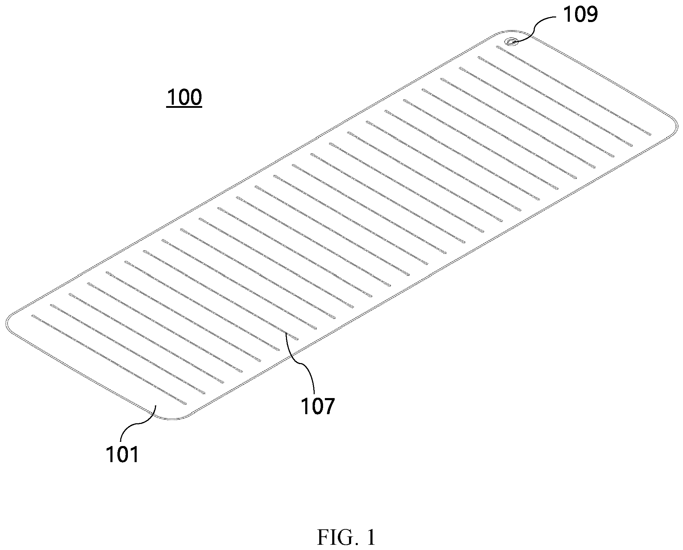

FIG. 1 to FIG. 3 show an inflatable pad 100 according to a first embodiment of the present disclosure and components thereof.

Referring to FIG. 1, in the illustrated embodiment, the inflatable pad 100 is substantially rectangular on the whole. It is to be understood that the shape of the inflatable pad 100 is not limited in the present disclosure. In some other implementation variants, the inflatable pad 100 may also be in other appropriate shapes, such as a substantially oval shape and a substantially conical shape.

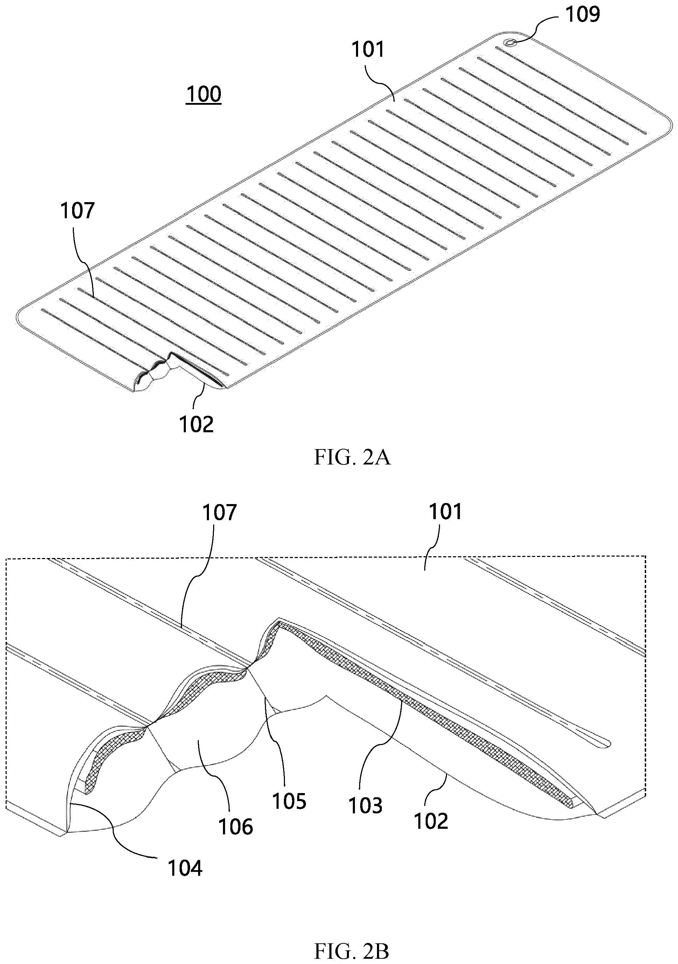

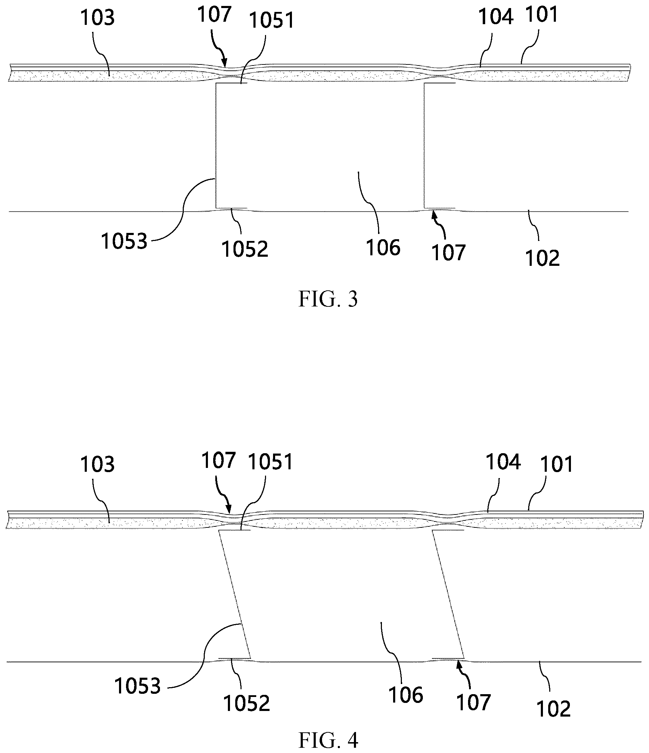

Referring to FIGS. 2A, 2B and 3, the inflatable pad 100 comprises a top sheet 101, and a bottom sheet 102 to jointly define an inflatable chamber 106 therebetween, an air valve 109, and at least one thermal insulation layer 103. The inflatable pad 100 may optionally additionally comprise a connecting sheet 104, and/or a plurality of tensioning members 105.

The periphery of the top sheet 101 and the periphery of the bottom sheet 102 are for example connected to each other by means of welding, etc. to jointly define the inflatable chamber 106. The top sheet 101 may be configured for a user to sit and lie down, and the bottom sheet 102 may be configured for the contact with the ground. The top sheet 101 and the bottom sheet 102 may be of substantially the same shape and dimension. The top sheet 101 and the bottom sheet 102 may be substantially parallel. The air valve 109 may be provided onto the top sheet 101, for instance welded thereto, and may be provided adjacent to a side edge of the inflatable pad 100 as shown in the figure. In an alternative, the air valve 109, may be provided onto, for instance welded to the bottom sheet 102. The position of the air valve 109 is not limited in the present disclosure. The air valve may be an electric air valve or a non-electric air valve.

For example, the top sheet 101 comprises an outer layer oriented upwards away from the inflatable chamber 106 and an inner layer oriented downwards towards the inflatable chamber 106. In an embodiment, the outer layer is a fabric layer in contact with a human body, and the inner layer is formed of weldable material. The inner layer may be a polymer material layer. The fabric layer is for example made of one or a combination of more of cotton fiber, wool fiber, silk fiber, hemp fiber, regenerated fiber, polyester fiber, polyamide fiber, polyacrylonitrile fiber, polyvinyl alcohol fiber, polypropylene fiber, polyurethane fiber and inorganic fiber, and the polymer material layer is for example made of one or a combination of more of polyvinyl chloride (PVC), thermoplastic polyurethane elastomer (TPU), polyurethane (PU), polypropylene (PP), polyethylene (PE), polyethylene terephthalate (PET), nylon and other suitable polymer materials. The bottom sheet 102 may be of the same structure as the top sheet 101, i.e., the bottom sheet 102 may comprise an outer layer oriented downwards away from the inflatable chamber 106 and an inner layer oriented upwards towards the inflatable chamber 106. The outer layer is, for example, a fabric layer made of the material described above, and the inner layer is, for example, a polymer layer made of the material described above, so that the human body can sleep on either side of the inflatable pad 100. Optionally, the bottom sheet 102 may be of a different structure than the top sheet 101, for example, the bottom sheet 102 only comprises a polymer material layer. The polymer material layers of the top sheet 101 may have a thickness of 0.04 mm to 0.18 mm, for example, about 0.06 mm. The polymer material layers of the bottom sheet 102 may have a thickness of 0.04 mm to 0.18 mm, for example, about 0.06 mm.

A single thermal insulation layer 103 may be arranged in the inflatable chamber 106. In an embodiment, also a single connecting sheet 104 may be arranged in the inflatable chamber 106. However, the invention is not limited thereto. The thermal insulation layer 103 may be of substantially the same shape and dimension as the top sheet 101 and the bottom sheet 102. In embodiments, the thermal insulation layer 103 extends parallel to the top and/or bottom sheet. The thermal insulation layer 103 may extend over more than 90% of the surface area of the at least one of the top sheet or the bottom sheet 101, 102, respectively. In embodiments, the thermal insulation layer 103 may extend over more than 95% of the surface area of the at least one of the top sheet 101 or the bottom sheet 102, respectively. In embodiments, the thermal insulation layer 103 may extend over more than 98% of the surface area of the at least one of the top sheet 101 or the bottom sheet 102, respectively. The thermal insulation layer 103 is an integral-piece thermal insulation layer and is in the form of a batting-type sheet material. The batting-type sheet material may be soft and fluffy. According to the present disclosure, the thermal insulation layer 103 is preferably made of insulation fiber. For example, the thermal insulation layer 103 is made of one or a combination of more of cotton fiber, wool fiber, viscose fiber, acetate fiber, polyester fiber (especially polyethylene terephthalate (PET) fiber), polyamide fiber, polyacrylonitrile fiber, polyvinyl alcohol fiber, polypropylene fiber and polyurethane fiber. The connecting sheet 104 may be provided to improve the connection between the thermal insulation layer 103 and the top or bottom sheets 101, 102. The melting point of the connection sheet 104 may be set lower than that of the inner layer of the top sheet 101 and/or bottom sheet 102, respectively. Consequently, during the welding process, as the temperature increases, the connection sheet 104 melts before the inner layer of the top sheet 101 and/or bottom sheet 102. This facilitates the fusion of the thermal insulation layer 103 with the inner layer of top sheet 101 and/or bottom sheet 102, thereby increasing the welding strength. Additionally, the connection sheet 104 melting before the inner layer of the top sheet 101 and/or bottom sheet 102 helps protect the integrity of the top sheet 101 and/or bottom sheet 102, preventing air leakage in the inflatable pad caused by the melting of the inner layer of the top sheet 101 and/or bottom sheet 102, respectively.

However, the connection sheet 104 can also be omitted. The connection sheet 104 may be of substantially the same shape and dimension as the top sheet 101, the bottom sheet 102 and the thermal insulation layer 103. For example, the connecting sheet 104 may be made of the same material as the inner layer of the top sheet 101. For example, the connecting sheet 104 may be made of weldable material. The connecting sheet 104 may be made of one or a combination of more of polyvinyl chloride (PVC), thermoplastic polyurethane elastomer (TPU), polyurethane (PU), polypropylene (PP), polyethylene (PE), polyethylene terephthalate (PET), nylon and other suitable polymer materials. Optionally, the connecting sheet 104 may be made of a fabric bonding material or a laminated mesh material. The term "fabric bonding material" may refer to a double-layer material formed by bonding the fabric layer as listed above to the polymer material layer as listed above, and the term "laminated mesh material" may refer to a three-layer material formed by bonding the two polymer material layers as listed above to the fabric layer as listed above sandwiched therebetween. In the illustrated embodiment, the periphery of the connecting sheet 104 is for example connected to the periphery of the top sheet 101 and the periphery of the bottom sheet 102 by means of welding, etc. According to an implementation variant, there may be a gap between the periphery of the connecting sheet 104 and the periphery of the top sheet 101, and a gap between the periphery of the connecting sheet and the periphery of the bottom sheet 102. The connecting sheet may have a thickness of 0.04 mm to 0.10 mm, for example, about 0.06 mm.

In an embodiment, a plurality of tensioning members 105 may be additionally provided. The plurality of tensioning members 105 may be uniformly arranged in the inflatable chamber 106 in a length direction of the inflatable pad 100 and connect the top sheet 101 and the bottom sheet 102, for tensioning the inflatable chamber 106 after inflation. The tensioning member 105 may be made of the same material as the inner layer of the top sheet 101 and, if a connecting sheet 104 is present, as the connecting sheet 104. For example, the tensioning member 105 may be made of a weldable material. The tensioning member 105 may be made of one or a combination of more of polyvinyl chloride (PVC), thermoplastic polyurethane elastomer (TPU), polyurethane (PU), polypropylene (PP), polyethylene (PE), polyethylene terephthalate (PET), nylon and other suitable polymer materials. Optionally, the tensioning member 105 may also be made of a fabric bonding material or a laminated mesh material.

In the first embodiment, particularly referring to FIG. 3, the tensioning member 105 is a C-shaped tensioning member. Specifically, after the inflatable chamber 106 is inflated, the tensioning member 105 comprises a main body 1053 extending substantially perpendicular to the top sheet 101 and the bottom sheet 102, and an upper connecting portion 1051 and a lower connecting portion 1052 that respectively extend from the top and the bottom of the main body 1053 on the same side of the main body 1053. An upper connecting portion 1051 and a lower connecting portion 1052 are perpendicular to the main body 1053. On the cross section shown in FIG. 3, the upper connecting portion 1051, the main body 1053 and the lower connecting portion 1052 of the tensioning member 105 are integrally formed into a substantially C shape. The upper connecting portion 1051 is connected to the top sheet 101, and the lower connecting portion 1052 is connected to the bottom sheet 102.

Particularly referring to FIGS. 2B and 3, a plurality of welding regions of the inflatable pad 100 may comprise a plurality of substantially parallel welding lines 107 that may be uniformly arranged at an upper portion and a lower portion of the inflatable pad 100 in the length (or width) direction of the inflatable pad 100. That is, each welding line 107 may substantially extend in a width (or length) direction of the inflatable pad 100. The distance between every two adjacent welding lines 107 may be approximately equal. At the position of each welding line 107 at the upper portion, the inner layer of the top sheet 101, which may be a polymer material layer, the connecting sheet 104, the thermal insulation layer 103, and the upper connecting portion 1051 of one tensioning member 105 are for example welded together from top to bottom by means of high-frequency welding, hot-press welding, etc. That is, the connecting sheet 104 is welded between the top sheet 101 and the thermal insulation layer 103, and the upper connecting portion 1051 of the tensioning member 105 is welded to the bottom of the thermal insulation layer 103, such that the integral-piece thermal insulation layer 103 may be firmly fixed to the top sheet 101. However, the connecting sheet 104 may also be omitted such that the thermal insulation layer 103 is directly welded to the inner layer of the top sheet 101. It can be understood that the thickness of the batting-type thermal insulation layer 103 is compressed at the positions of these welding lines 107 after welding. In an embodiment, the thermal insulation layer 103 may be stepped such that it comprises regions of different thickness. The tensioning members 105 may then be welded to the stepped regions of the thermal insulation layer 103 having a lower thickness. Since the provision of the tensioning members 105 improves the R-value, a decreased thickness of the thermal insulation layer 103 at the location of the tensioning members 105 may not result in the formation of cold bridges or cold spots. At the position of each welding line 107 at the lower portion, the lower connecting portion 1052 of the tensioning member 105 is welded to the inner layer, which may be a polymer material layer, of the bottom sheet 102. In embodiments, a thermal insulation layer 103 may also be provided between the inner layer of the bottom sheet 102 and the tensioning member 105. A connecting sheet 104 may further be provided. In embodiments, the plurality of tensioning members 105 may also be omitted. In embodiments, the connection sheet 104 may also be omitted such that the thermal insulation layer 103 is directly welded to the inner side of the top and/or bottom sheet 101, 102.

The R-value of the inflatable pad is closely related to the thickness of the thermal insulation layer 103. If the thermal insulation layer 103 is made of insulation fiber, the R-value of the inflatable pad is closely related to the thickness of the insulation fiber. Optionally, the insulation fiber may have a thickness of 0.5 cm to 3 cm in a natural fluffy state. Further optionally, the insulation fiber may have a thickness of 0.8 cm to 2 cm in a natural fluffy state. The larger the thickness of the insulation fiber is, the better the effect of preventing convection between hot air and cold air in the inflatable pad is, the higher the thermal resistance of the inflatable pad is, and the larger the R-value is.

The R-value of the inflatable pad is closely related to the weight of the insulation fiber per square meter. Optionally, the weight of the insulation fiber placed inside the inflatable pad may be 20 g/m² to 400 g/m². Further preferably, the weight of the insulation fiber placed inside the inflatable pad may be 80 g/m² to 160 g/m². For the inflatable pad with a height of 7.5 cm after inflation, if an integral-piece insulation fiber of 60 g/m² is used, the R-value is about 2.4 ft²·°F·h/Btu (0.42 K- m²/W); and if an integral-piece insulation fiber of 80 g/m² is used, the R-value is about 2.7 ft²·°F·h/Btu (0.48 K- m²/W). It can be seen that the weight per square meter of the insulation fiber has a significant impact on improving the R-value. If the weight per square meter of the insulation fiber is further increased, the R-value may also rise further.

The R-value of the inflatable pad is closely related to the height of the inflatable pad. Optionally, the inflatable pad in an inflated state may have a height of 2 cm to 62 cm. Further preferably, the inflatable pad in an inflated state may have a height of 5 cm to 18 cm. On the basis of the inflatable pad with the height of 7.5 cm described above, the thickness of the inflatable pad may be further increased. A larger thickness means that the distance between the top sheet and the bottom sheet is longer, and more air enters the inflatable chamber of the inflatable pad during inflation. As is well known to those skilled in the art, air has low thermal conductivity and is a poor conductor of heat. ASTM F3340-22 is to measure the heat flux of a vertical thickness of the inflatable pad in one dimension. More air in the inflatable pad means less heat flux. Heat flux is negatively related to thermal resistance, so that when the heat flux decreases, the thermal resistance increases and the R-value rises. For example, if the height of the inflatable pad is doubled from 7.5 cm to 15 cm, for the inflatable pad with the height of 15 cm, an integral-piece insulation fiber of 80 g/m² is used, and the R-value may be improved to about 3.5 ft²·°F·h/Btu (0.62 K- m²/W). It can be seen that the height of the inflatable pad has a significant impact on improving the R-value. The R-value may rise if the height of the inflatable pad increases.

### Second Embodiment

FIG. 4 to FIG. 5 show an inflatable pad 100 according to a second embodiment of the present disclosure and components thereof.

It can be understood that the inflatable pad 100 according to the second embodiment is of a structure similar to that of the inflatable pad 100 according to the first embodiment, so that the similarity to the inflatable pad 100 according to the first embodiment may be understood with the help of the above detailed descriptions, and will not be repeated in this section.

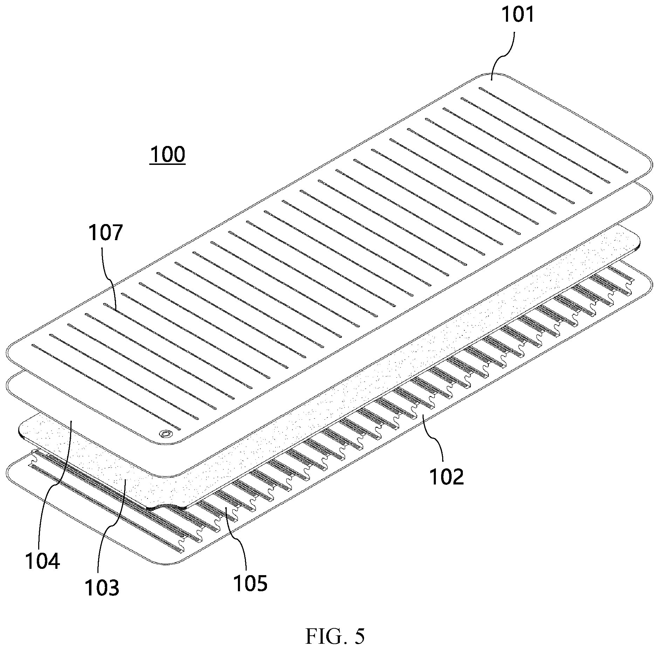

Referring to FIGS. 4 and 5, the difference from the inflatable pad 100 according to the first embodiment is that in the inflatable pad 100 according to the second embodiment, the tensioning member 105 is a Z-shaped tensioning member. Specifically, after the inflatable chamber 106 is inflated, the tensioning member 105 comprises a main body 1053, and an upper connecting portion 1051 and a lower connecting portion 1052 that extend from the top and the bottom of the main body 1053 on two opposite sides of the main body 1053 respectively. On the cross section shown in FIG. 4, the upper connecting portion 1051, the main body 1053 and the lower connecting portion 1052 of the tensioning member 105 are integrally formed into a substantially Z shape. As before, the connecting sheet 104 is welded between the top sheet 101 and the thermal insulation layer 103, and the upper connecting portion 1051 of the tensioning member 105 is welded to the bottom of the thermal insulation layer 103, such that the integral-piece thermal insulation layer 103 may be firmly fixed to the top sheet 101. However, the connecting sheet 104 may also be omitted such that the thermal insulation layer 103 is welded to the inner layer of the top sheet 101. The upper connecting portion 1051 is then connected to the inner layer of the top sheet 101, which may be a polymer material layer, together with the thermal insulation layer 103, and the lower connecting portion 1052 is connected to the inner layer of the bottom sheet 102, which may be a polymer material layer. In case a thermal insulation layer 103 is also provided on the bottom sheet 102, the lower connecting portion 1052 is connected to the inner layer of the bottom sheet 102 together with the thermal insulation layer 103. A connecting sheet 104 may also be provided between the thermal insulation layer 103 and the bottom sheet 102. The connecting sheet 104 may also be omitted. In some implementations, the main body 1053 is slightly inclined with respect to the top sheet 101 and the bottom sheet 102, i.e., the main body of the tensioning member is not perpendicular to the top sheet 101 or the bottom sheet 102.

### Third embodiment

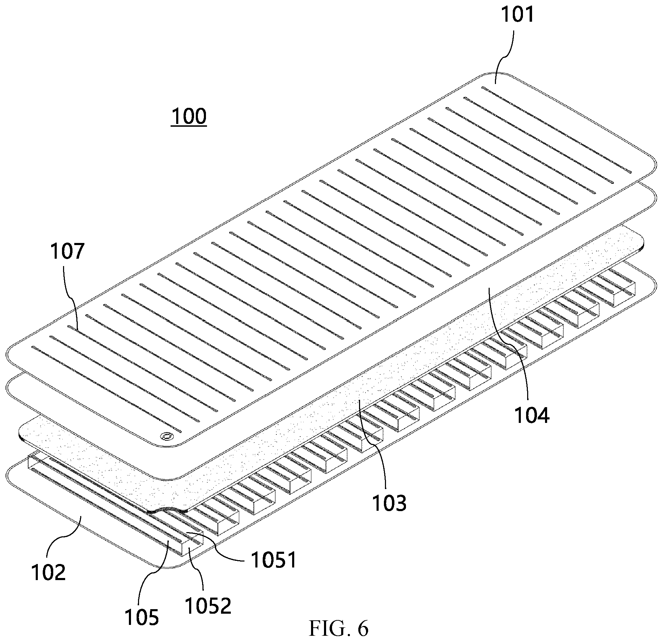

FIG. 6 shows an inflatable pad 100 according to a third embodiment of the present disclosure and components thereof.

It can be understood that the inflatable pad 100 according to the third embodiment is of a structure similar to that of the inflatable pad 100 according to the first and second embodiments, so that the similarity to the inflatable pad 100 according to the first and second embodiment may be understood with the help of the above detailed descriptions, and will not be repeated in this section.

Referring to FIG. 6, the difference from the inflatable pad 100 according to the first embodiment is that in the inflatable pad 100 according to the third embodiment, the tensioning member 105 is a square tensioning member. Specifically, after the inflatable chamber 106 is inflated, the tensioning member 105 has a substantially rectangular cross section, and the substantially flat top and bottom of the tensioning member 105 form an upper connection portion 1051 and a lower connection portion 1052 of the tensioning member 105 respectively. Similar to the first embodiment, the upper connecting portion 1051 is welded to a polymer material layer of a top sheet 101, a connecting sheet 104 and a thermal insulation layer 103 along two adjacent approximately parallel welding lines 107. The upper connecting portion 1051 is in contact with the bottom of the thermal insulation layer 103. The lower connecting portion 1052 is also welded to a polymer material layer of a bottom sheet 102 along two adjacent approximately parallel welding lines 107. As before, a thermal insulation layer 103 may also be provided on the bottom sheet 102. In embodiments, a connecting sheet 104 may also be provided on the bottom sheet 102. In embodiments, the connecting sheet 104 may also be omitted.

### Fourth Embodiment

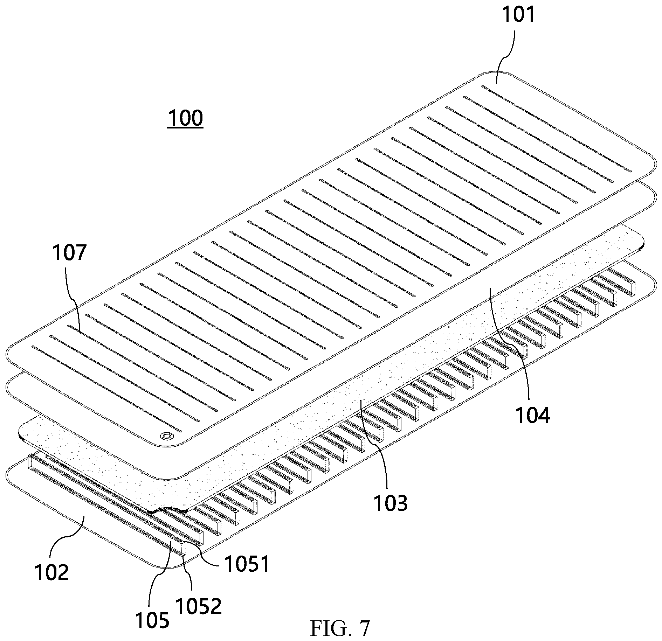

FIG. 7 shows an inflatable pad 100 according to a fourth embodiment of the present disclosure and components thereof.

It can be understood that the inflatable pad 100 according to the fourth embodiment is of a structure similar to that of the inflatable pad 100 according to the first, second, and third embodiments, so that the similarity to the inflatable pad 100 according to the first, second and third embodiment may be understood with the help of the above detailed descriptions, and will not be repeated in this section.

Referring to FIG. 7, the difference from the inflatable pad 100 according to the first embodiment is that in the inflatable pad 100 according to the fourth embodiment, the tensioning member 105 is a square tensioning member. Specifically, after the inflatable chamber 106 is inflated, the tensioning member 105 has a substantially rectangular cross section, and the substantially flat top and bottom of the tensioning member 105 form an upper connection portion 1051 and a lower connection portion 1052 of the tensioning member 105 respectively. Similar to the first embodiment, the upper connecting portion 1051 is welded to a polymer material layer of a top sheet 101, a connecting sheet 104 and a thermal insulation layer 103 along a single welding line 107. The upper connecting portion 1051 is in contact with the bottom of the thermal insulation layer 103. The lower connecting portion 1052 is also welded to a polymer material layer of a bottom sheet 102 along a single welding line 107. As before, a thermal insulation layer 103 may also be provided on the bottom sheet 102. In embodiments, a connecting sheet 104 may also be provided on the bottom sheet 102. In embodiments, the connecting sheet 104 may also be omitted.

It can be understood that the shape of the tensioning member 105 according to the present disclosure is not limited to the shapes described in the first to fourth embodiments. In some other implementation variants, the tensioning member 105 may also be any other tensioning members suitable for the inflatable pad 100, such as a Y-shaped tensioning member and a strand tensioning member, as long as sufficient connection strength is met.

### Fifth Embodiment

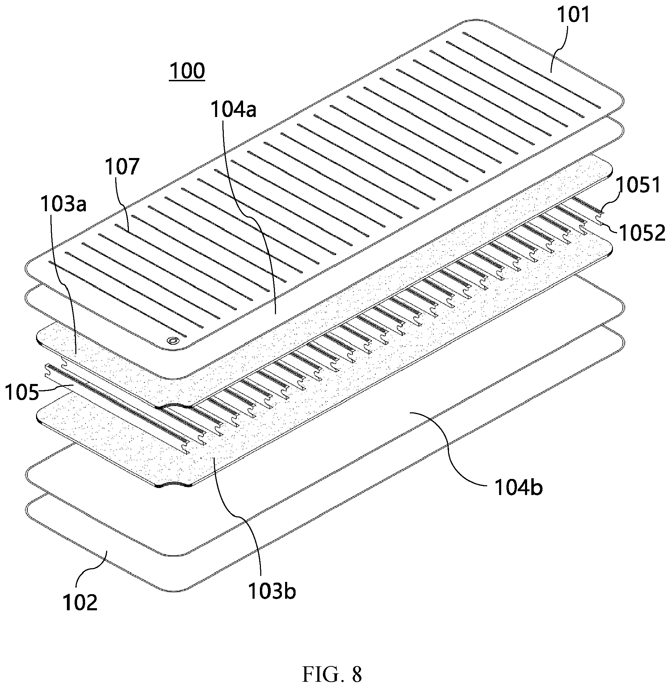

FIG. 8 shows an inflatable pad 100 according to a fifth embodiment of the present disclosure and components thereof.

It can be understood that the inflatable pad 100 according to the fifth embodiment is of a structure similar to that of the inflatable pad 100 according to the first to fourth embodiments, so that the similarity to the inflatable pad 100 according to the first to fourth embodiments may be understood with the help of the above detailed descriptions, and will not be repeated in this section.

Referring to FIG. 8, the difference from the inflatable pad 100 according to the first embodiment is that the inflatable pad 100 according to the fifth embodiment comprises two substantially identical thermal insulation layers 103 and two substantially identical connecting sheets 104. Specifically, the inflatable pad 100 according to the fifth embodiment sequentially comprises a top sheet 101, a first connecting sheet 104a, a first thermal insulation layer 103a, a plurality of tensioning members 105, a second thermal insulation layer 103b, a second connecting sheet 104b and a bottom sheet 102 from top to bottom.

At the position of each welding line 107 at the upper portion, an inner layer, which may be a polymer material layer, of the top sheet 101, the first connecting sheet 104a, the first thermal insulation layer 103a, and an upper connecting portion 1051 of one tensioning member 105 are for example welded together from top to bottom by means of high-frequency welding, hot-press welding, etc. That is, the connecting sheet 104a is welded between the top sheet 101 and the first thermal insulation layer 103a, and the upper connecting portion 1051 of the tensioning member 105 is welded to the bottom of the first thermal insulation layer 103a, such that the integral-piece first thermal insulation layer 103a may be firmly fixed to the top sheet 101. At the position of each welding line 107 at the lower portion, an inner layer, which may be a polymer material layer of the bottom sheet 102, the second connecting sheet 104b, the second thermal insulation layer 103b, and a lower connecting portion 1052 of one tensioning member 105 are for example welded together from bottom to top by means of high-frequency welding, hot-press welding, etc. That is, the second connecting sheet 104b is welded between the bottom sheet 102 and the second thermal insulation layer 103b, and the lower connecting portion 1052 of the tensioning member 105 is welded to the top of the second thermal insulation layer 103b, such that the integral-piece second thermal insulation layer 103b may be firmly fixed to the bottom sheet 102. It can be understood that the thicknesses of the batting-type first thermal insulation layer 103a and the batting-type second thermal insulation layer 103b are compressed at the positions of these welding lines 107 after welding. As before, the plurality of tensioning members 105 may also be omitted.

### Sixth Embodiment

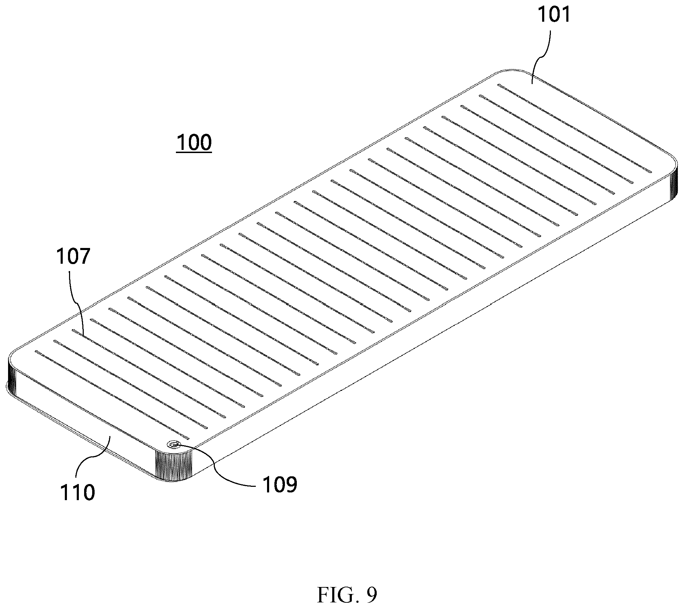

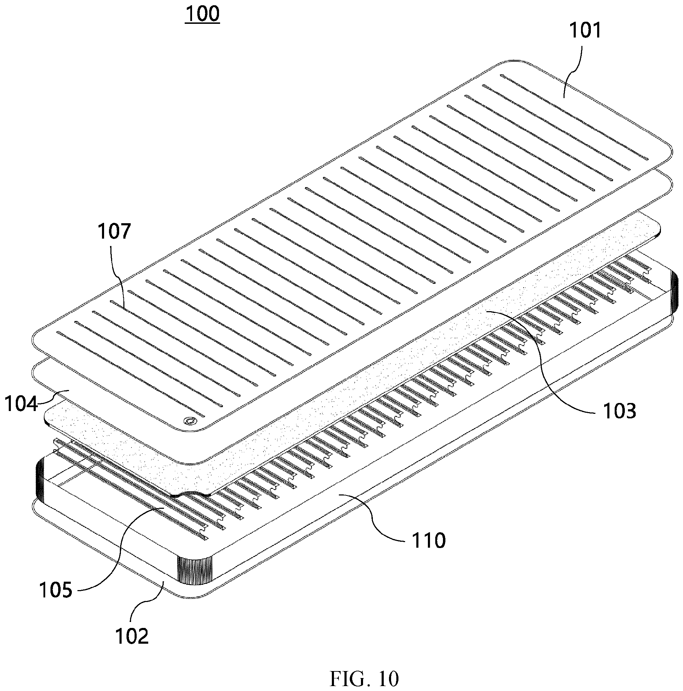

FIG. 9 and FIG. 10 show an inflatable pad 100 according to a sixth embodiment of the present disclosure and components thereof.

It can be understood that the inflatable pad 100 according to the sixth embodiment is of a structure similar to that of the inflatable pad 100 according to the first to fifth embodiments, so that the similarity to the inflatable pad 100 according to the first to fifth embodiment may be understood with the help of the above detailed descriptions, and will not be repeated in this section.

Referring to FIG. 9 and FIG. 10, the difference from the inflatable pad 100 according to the first embodiment is that the inflatable pad 100 according to the sixth embodiment further comprises a lateral confining sheet 110 or side wall 110. The periphery of a top sheet 101 and the periphery of a bottom sheet 102 may be connected by means of the lateral confining sheet 110. Specifically, the periphery of the top sheet 101 may be welded to a top edge of the lateral confining sheet 110, and the periphery of the bottom sheet 102 may be welded to a bottom edge of the lateral confining sheet 110, so that the top sheet 101, the bottom sheet 102 and the lateral confining sheet jointly define an inflatable chamber 106. An air valve 109 may be welded to the top sheet 101 or the bottom sheet 102, or to the lateral confining sheet 110.

For example, the lateral confining sheet 110 may be made of the same material as the top sheet 101 or bottom sheet 102. For example, the lateral confining sheet 110 may comprise an outer layer facing outside of the inflatable chamber 106 and an inner layer facing inside of the inflatable chamber 106. In an embodiment, the outer layer may be a fabric layer, and the inner layer may be made of weldable material. The inner layer may be a polymer material layer. For example, the inner layer of the lateral confining sheet 110 may be made of one or a combination of more of polyvinyl chloride (PVC), thermoplastic polyurethane elastomer (TPU), polyurethane (PU), polypropylene (PP), polyethylene (PE), polyethylene terephthalate (PET), nylon and other suitable polymer materials.

It can be understood that the embodiments described above are not exhaustive, and on the basis of the disclosure of the first to sixth embodiments, the present disclosure also covers various implementation variants readily conceivable to those skilled in the art.

For example, according to an implementation variant not illustrated, the inflatable pad 100 may comprise only a single thermal insulation layer 103 fixed to the bottom sheet 102, i.e., may comprise only the second thermal insulation layer 103b according to the fifth embodiment but not the first thermal insulation layer 103a.

In addition, according to some other implementation variants, regardless of whether the inflatable pad 100 comprises a single thermal insulation layer 103 as in the first, second, third, fourth and sixth embodiments or two thermal insulation layers 103 as in the fifth embodiment, there may be no connecting sheet 104 between the thermal insulation layer 103 and the top sheet 101 or the bottom sheet 102, i.e., the thermal insulation layer 103 may be directly welded to the inner, which may be a polymer material layer, of the top sheet 101 or an inner, which may be a polymer material layer of the bottom sheet 102. The polymer material layer of the top sheet 101 welded to the thermal insulation layer 103 may have a thickness of 0.08 mm to 0.28 mm. The polymer material layer of the bottom sheet 102 welded to the thermal insulation layer 103 may have a thickness of 0.08 mm to 0.28 mm.

In addition, according to some other implementation variants, in addition to the thermal insulation layer 103, the inflatable pad 100 may further comprise at least one other thermal insulation layer, which is arranged in the inflatable chamber 106 and through which for example the tensioning member 105 passes. The at least one other thermal insulation layer may be made of the same material as the thermal insulation layer 103, and may also be made of any other suitable thermal insulation materials.

### Seventh Embodiment

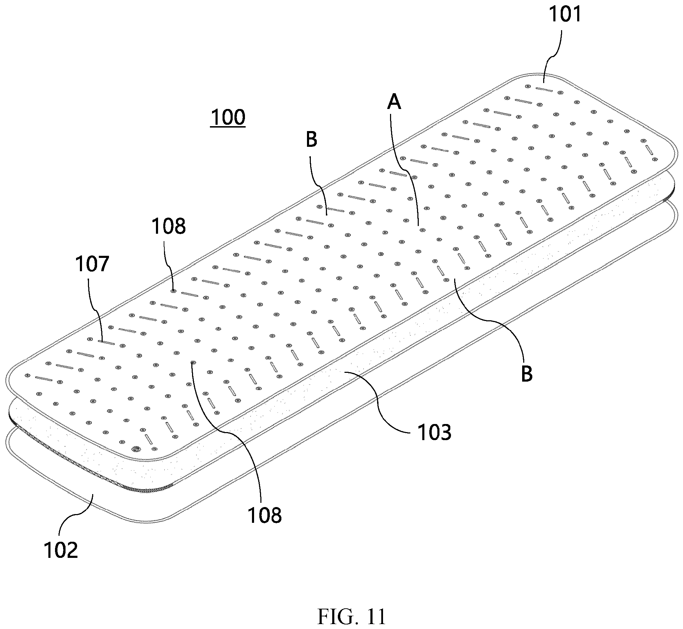

FIG. 11 shows an inflatable pad 100 according to a seventh embodiment of the present disclosure and components thereof.

It can be understood that the inflatable pad 100 according to the seventh embodiment is of a structure similar to that of the inflatable pad 100 according to the first embodiment, so that the similarity to the inflatable pad 100 according to the first embodiment may be understood with the help of the above detailed descriptions, and will not be repeated in this section.

Referring to FIG. 11, the difference from the inflatable pad 100 according to the first to sixth embodiment is that the inflatable pad 100 according to the seventh embodiment only comprises a top sheet 101, a bottom sheet 102 and a thermal insulation layer 103, but not a connecting sheet 104 or a tensioning member 105. In addition, in the seventh embodiment, a plurality of welding regions of the inflatable pad 100 comprise a plurality of welding points 108 and a plurality of welding lines 107 distributed uniformly.

Specifically, the inflatable pad 100 comprises a central region A in its width direction and two edge regions B located at two sides of the central region A. The central region A is provided with a plurality of welding points 108. These welding points 108 may be arranged in a uniform array. Each of the two edge regions B may be provided with a plurality of welding lines 107 parallel to each other. One welding point 108 may be arranged adjacent to a side edge of the inflatable pad 100. The respective welding point 108 may be arranged at a certain distance from each welding line 107. Such arrangement increases the connection firmness of two ends of the welding line 107, thus ensuring the flatness of the inflatable pad 100 and improving the overall use effect of the inflatable pad 100. It can be understood that, either the shape or the specific arrangement of the welding region is not limited in the present disclosure. The welding region of the inflatable pad 100 according to the seventh embodiment may also comprise only the welding line 107 but not the welding point 108. For example, the welding region according to the seventh embodiment may be provided as a plurality of welding lines 107 that are uniformly arranged and parallel to each other as in the first to sixth embodiments. Furthermore, according to some implementation variants, the plurality of welding regions of the inflatable pad 100 may for example comprise only a plurality of welding points 108 arranged in a uniform array but not the welding line 107.

In the seventh embodiment, an inner layer, which may be a polymer material layer, of the top sheet 101, the single thermal insulation layer 103, and an inner layer, which may be a polymer material layer, of the bottom sheet 102 are for example welded together from top to bottom along these welding points 108 and these welding lines 107 by means of high-frequency welding, hot-press welding, etc. That is, the top of the thermal insulation layer 103 is directly welded to the inner layer of the top sheet 101, and the bottom of the thermal insulation layer 103 is directly welded to the inner layer of the bottom sheet 102, so that the integral-piece thermal insulation layer 103 may be firmly fixed to the top sheet 101 and the bottom sheet 102, and the thickness of the batting-type thermal insulation layer 103 is compressed at these welding points 108 and these welding lines 107 after welding.

Since the connecting sheet 104 is not provided in the seventh embodiment, the thickness of each of the top sheet 101 and the bottom sheet 102 is preferably set to be greater than that of the top sheet 101 or the bottom sheet 102 in the first to sixth embodiments. For example, in the seventh embodiment, the inner layer of the top sheet 101 and the inner layer of the bottom sheet 102 may each have a thickness of 0.08 mm to 0.28 mm. However, in the first to sixth embodiments, when the connecting sheet 104 is provided, the inner layer of the top sheet 101 and the inner layer of the bottom sheet 102 may each have a thickness of 0.04 mm to 0.18 mm, for example, about 0.06 mm. The connecting sheet 104 may have a thickness of 0.04 mm to 0.10 mm, for example, about 0.06 mm.

Based on the above embodiments, it can be known that compared with the inflatable pad using small pieces of insulation fibers in the prior art, the inflatable pad 100 according to the present disclosure is characterized in that the batting-type integral-piece thermal insulation layer 103 is arranged in the inflatable chamber 106 formed by the top sheet 101 and the bottom sheet 102. The integral-piece thermal insulation layer 103 may be connected to the top sheet 101 or the bottom sheet 102, or two integral-piece thermal insulation layers 103 connected to the top sheet 101 and the bottom sheet 102 respectively may also be provided. In the inflatable pad 100 according to the present disclosure, the thermal insulation performance of the inflatable pad 100 is enhanced, heat convection between the top and the bottom of the inflatable pad 100 is reduced, and the R-value is improved.

Furthermore, compared with an inflatable pad using small pieces of insulation fibers in the prior art, according to the present disclosure the thermal layer may be fixed more firmly and thus is less likely to fall off, and for example may be directly connected to the top sheet and the bottom sheet of the product by means of high-frequency welding, hot-press welding, etc. without cutting the insulation fibers or making holes in the insulation fibers and without attaching the insulation fibers onto the top sheet 101 or the bottom sheet 102 by glue. The inflatable pad 100 according to the present disclosure has fewer manufacturing processes, and is high in manufacturing efficiency, low in labor cost and short in production time.

It can be understood that the welding methods mentioned in the description comprise high-frequency welding, hot-press welding and any other suitable welding methods.

It can also be understood that the components and features described herein can be made of various other materials including, but not limited to, polymer, rubber, metal, and other suitable materials well known to those skilled in the art or a combination thereof. The described and illustrated embodiments only show the shapes, dimensions and arrangements of various optional components of the inflatable pad according to the present disclosure, which are merely illustrative but not limiting, and other shapes, dimensions and arrangements may be employed without departing from the spirit and scope of the present disclosure. Those skilled in the art can easily make modifications, variations, and equivalents of these embodiments on the basis of the disclosed content. For example, the illustrated or described features as part of an embodiment can be used with another embodiment to provide a further embodiment. The present disclosure is intended to cover these modifications, variations, and equivalents.

The technical content and technical features of the present disclosure are disclosed above, but it should be understood that those skilled in the art can make various variations and improvements to the concepts disclosed above under the inventive idea of the present disclosure, and all the variations and improvements fall within the scope of protection of the present disclosure. The description of the above implementations is illustrative rather than restrictive, and the scope of protection of the present disclosure is determined by the claims.

## Claims

1. An inflatable pad (100), which comprises:
a top sheet (101);
a bottom sheet (102) connected to the top sheet (101) to jointly define an inflatable chamber (106);
an air valve (109); and
at least one thermal insulation layer (103), wherein each of the at least one thermal insulation layer (103) is an integral-piece batting-type sheet material, and is arranged in the inflatable chamber (106) and welded to the top sheet (101) and/or the bottom sheet (102) along a plurality of welding regions.

2. The inflatable pad (100) according to claim 1, wherein at least one of the top sheet (101) and the bottom sheet (102) comprises an outer layer facing away from the inflatable chamber (106) and an inner layer facing towards the inflatable chamber (106), the outer layer being a fabric layer, and the inner layer being made of a polymer material.

3. The inflatable pad (100) according to claim 2, wherein the fabric layer comprises cotton fiber, wool fiber, silk fiber, hemp fiber, regenerated fiber, polyester fiber, polyamide fiber, polyacrylonitrile fiber, polyvinyl alcohol fiber, polypropylene fiber, polyurethane fiber, or inorganic fiber.

4. The inflatable pad (100) according to claims 1 or 2, wherein the polymer material comprises polyvinyl chloride, thermoplastic polyurethane elastomer, polyurethane, polypropylene, polyethylene, polyethylene terephthalate or nylon.

5. The inflatable pad (100) according to any one of the previous claims, wherein the at least one thermal insulation layer (103) is made of fiber, preferably cotton fiber, wool fiber, viscose fiber, acetate fiber, polyester fiber, polyamide fiber, polyacrylonitrile fiber, polyvinyl alcohol fiber, polypropylene fiber, or polyurethane fiber.

6. The inflatable pad (100) according to any one of the previous claims, wherein the inflatable pad (100) further comprises at least one connecting sheet (104), the connecting sheet (104) being arranged in the inflatable chamber (106) and welded between the top sheet (101) and the at least one thermal insulation layer (103) or between the bottom sheet (102) and the at least one thermal insulation layer (103) along the plurality of welding regions.

7. The inflatable pad (100) according to claim 6, wherein the connecting sheet (104) is made of
polyvinyl chloride, thermoplastic polyurethane elastomer, polyurethane, polypropylene, polyethylene, polyethylene terephthalate or nylon, or
a fabric bonding material or a laminated mesh material.

8. The inflatable pad (100) according to claims 6 or 7, wherein the connecting sheet (104) has a thickness of 0.04 mm to 0.10 mm, and the top sheet (101) and/or the bottom sheet (102) comprise(s) a polymer material layer welded to the connecting sheet (104), the polymer material layer having a thickness of 0.04 mm to 0.18 mm.

9. The inflatable pad (100) according to any one of the previous claims 1 to 5, wherein the inflatable pad (100) further comprises a plurality of tensioning members (105) connecting the top sheet (101) to the bottom sheet (102), each of the plurality of tensioning members (105) being simultaneously welded to the at least one thermal insulation layer (103) and the top sheet (101) and/or the bottom sheet (102) along at least one of the welding regions.

10. The inflatable pad (100) according to claim 9, wherein the tensioning member (105) is made of
polyvinyl chloride, thermoplastic polyurethane elastomer, polyurethane, polypropylene, polyethylene, polyethylene terephthalate or nylon, or a fabric bonding material or a laminated mesh material.

11. The inflatable pad (100) according to claims 9 or 10, wherein the inflatable pad (100) further comprises a connecting sheet (104), the connecting sheet (104) being arranged between the top sheet (101) and the at least one thermal insulation layer (103) and/or between the bottom sheet (102) and the at least one thermal insulation layer (103) so that the at least one thermal insulation layer (103) is welded between the connecting sheet (104) and the plurality of tensioning members (105).

12. The inflatable pad (100) according to any one of the previous claims, wherein the inflatable pad (100) further comprises a lateral confining sheet (110), the periphery of the top sheet (101) is connected to a top edge of the lateral confining sheet (110), and the periphery of the bottom sheet (102) is connected to a bottom edge of the lateral confining sheet (110), such that the top sheet (101), the bottom sheet (102) and the lateral confining sheet (110) jointly define the inflatable chamber (106).

13. The inflatable pad (100) according to any one of the previous claims, wherein the plurality of welding regions comprises a plurality of welding points (108) and/or a plurality of welding lines (107) distributed uniformly.

14. The inflatable pad (100) according to any one of the previous claims, wherein the inflatable pad (100) comprises a single thermal insulation layer (103), the single thermal insulation layer (103) being directly welded to the top sheet (101) and the bottom sheet (102).

15. The inflatable pad (100) according to claim 14, wherein each of the top sheet (101) and the bottom sheet (102) comprises a polymer material layer welded to the single thermal insulation layer (103), the polymer material layer having a thickness of 0.08 mm to 0.28 mm.

16. The inflatable pad (100) according to any one of the previous claims 1 to 13, wherein the inflatable pad (100) comprises a first thermal insulation layer (103a) welded to the top sheet (101) and a second thermal insulation layer (103b) welded to the bottom sheet (102).

17. The inflatable pad (100) according to any one of the previous claims, wherein the inflatable pad (100) in an inflated state has a height of 2 cm to 62 cm, preferably 5 cm to 18 cm.

18. The inflatable pad (100) according to any one of the previous claims, wherein the thermal insulation layer (103)
has a weight of 20 g/m² to 400 g/m^{2,} preferably 80 g/m² to 160 g/m², and/or
has a thickness of 0.5 cm to 3 cm in a natural fluffy state, preferably 0.8 cm to 2 cm.
